# EUROPÄISCHE PATENTANMELDUNG

(11) **EP 4 272 980 A1**
(43) Veröffentlichungstag der Anmeldung: **08.11.2023**
(21) Anmeldenummer: 23171012.0
(22) Anmeldetag: 02.05.2023
(51) Int. Cl.: B60D 1/01, B62D 15/02

(54) **SATTELKUPPLUNGSSYSTEM, ZUGFAHRZEUG UND SATTELZUG**

(30) Priorität: 06.05.2022 DE 102022111393
(71) Anmelder: JOST-Werke Deutschland GmbH, 63263 Neu-Isenburg (DE)
(72) Erfinder: Bobaki, Khairo, 60596 Frankfurt (DE); Algüera, José Manuel, 63739 Aschaffenburg (DE); Saupe, Swen, 55126 Mainz (DE)
(74) Vertreter: WSL Patentanwälte Partnerschaft mbB

(57) **Zusammenfassung**

Sattelkupplungssystem (60) mit einer Sattelkupplung (40) und einer Winkelmesseinrichtung (70), wobei die Winkelmesseinrichtung (70) mindestens einen Freiheitsgrad gegenüber der Sattelkupplung (40) aufweist

## Beschreibung

Die vorliegende Erfindung betrifft ein Sattelkupplungssystem, ein Zugfahrzeug und einen Sattelzug.

Ein Sattelzug besteht im Allgemeinen aus einem Zugfahrzeug mit einer Sattelkupplung und einem Sattelauflieger mit einem Königszapfen. Der Sattelauflieger wird mittels der Sattelkupplung an dem Zugfahrzeug befestigt und von ihr gezogen. Die Kraftübertragung zwischen Zugfahrzeug und Sattelauflieger erfolgt über den Königszapfen. Der Königszapfen stellt somit ein zentrales Element für die Verbindung von Sattelauflieger und Zugfahrzeug dar.

Im Falle einer Geradeausfahrt des Sattelzugs können hinsichtlich der auf den Königszapfen wirkenden Kräfte drei Fahrzustände eintreten: Zugbetrieb, Schubbetrieb und ein neutraler Fahrzustand. Im Zugbetrieb zieht das Zugfahrzeug über den Königszapfen an dem Sattelauflieger. Im Schubbetrieb ist dies umgekehrt, der Sattelauflieger schiebt das Zugfahrzeug. Der Schubbetrieb stellt sich beispielsweise dann ein, wenn das Zugfahrzeug aktiv abgebremst wird. Im neutralen Fahrzustand treten zwischen Zugfahrzeug und Sattelauflieger in Fahrtrichtung keine Kräfte auf. In der Praxis tritt der neutrale Fahrzustand selten und in aller Regel nur übergangsweise auf.

Seitens der Hersteller von Sattelaufliegern, Zugfahrzeugen und Sattelzügen besteht ein grundsätzliches Interesse daran, Kenntnis über den zu einem bestimmten Zeitpunkt vorliegenden Fahrzustand zu erlangen. Insbesondere besteht ein Interesse an einer kontinuierlichen Erfassung und gegebenenfalls Steuerung des Fahrzustands. Aus dem Stand der Technik sind daher mehrere Systeme bekannt geworden, die dies zu ermöglichen versuchen.

Die GB 2486474 A offenbart hierzu einen Königszapfen, bei dem Piezoelemente in den Zapfenkörper integriert sind. Piezoelemente ändern ihre elektrische Leitfähigkeit, wenn mechanische Belastung auf sie ausgeübt wird. Der Königszapfen weist im Randbereich zwei Piezoelemente auf. Ein Piezoelement ist in Fahrtrichtung vorne und ein Piezoelement in Fahrtrichtung hinten angeordnet. Auf diese Weise kann durch das vorne angeordnete Piezoelement der Schubbetrieb und durch das hinten angeordnete Piezoelement der Zugbetrieb erfasst werden.

Aus der EP 2 899 101 A1 ist ein Königszapfen bekannt, der mittels einer Tragplatte an einem Sattelauflieger befestigt ist. Königszapfen und Tragplatte weisen eine gemeinsame vertikale Bohrung auf, die in dem Königszapfen zentral verläuft. In der Bohrung ist ein Hebel angeordnet, auf den mittels zweier Federelemente Kräfte im Zug- und Schubbetrieb übertragen werden, wodurch der Hebel geschwenkt wird. Die Schwenkbewegung des Hebels wird durch Tastelemente erfasst, wodurch der Fahrzeugzustand ermittelt werden kann. Die Federelemente sind in radialen Bohrungen angeordnet, die mit der vertikalen Bohrung in Verbindung stehen. Durch die radialen Bohrungen wird der Königszapfen bei dieser Vorrichtung stark geschwächt, sodass die Gefahr eines Bruchs des Königszapfens besteht.

Bei Kurvenfahrten des Sattelzugs stellt der Königszapfen den Drehpunkt zwischen Zugfahrzeug und Sattelauflieger dar. Es besteht ein Interesse daran, den Winkel zwischen Zugfahrzeug und Sattelauflieger (Knickwinkel) möglichst exakt zu erfassen. Zielgröße ist eine Präzision von unter 1° Abweichung. Mit dieser Information können beispielsweise lenkbare Achsen des Sattelaufliegers gesteuert werden, sodass sie die Kurvenfahrt unterstützen. Zur Erfassung des Winkels zwischen Zugfahrzeug und Sattelauflieger sind aus dem Stand der Technik verschiedene Systeme bekannt.

Die WO 2010/019027 A1 offenbart ein System zum Erfassen der Relativposition von Zugfahrzeug und Sattelauflieger, bei dem die Sattelkupplung des Zugfahrzeugs einen Zapfen und der Königszapfen eine komplementäre Vertiefung aufweist. Das System ist jedoch ausschließlich für den Ankuppelvorgang gedacht und eignet sich daher nicht für die Ermittlung des Winkels zwischen Zugfahrzeug und Sattelauflieger bei Kurvenfahrten.

Bei einem in der WO 2013/180562 A1 beschriebenen System weist der Königszapfen entweder einen Magneten oder eine Spule auf. Die Sattelkupplung ist mit dem jeweils anderen Element ausgestattet. Mit diesem System soll es möglich sein, eine Relativdrehung des Königszapfens gegenüber der Sattelkupplung zu erfassen.

Ein weiteres System, mit dem die Relativdrehung zwischen Zugfahrzeug und Sattelauflieger ermittelt werden soll, wird in der WO 2009/000765 A2 offenbart. Dort ist ein Drehsensor vorgesehen, der eine Sensorscheibe umfasst, die Teil des Sattelaufliegers und um den Königszapfen herum angeordnet ist. Der Drehsensor wird mit der Sattelkupplung des Zugfahrzeugs verbunden, wenn der Sattelauflieger an das Zugfahrzeug gekoppelt ist, und sich dann relativ zu dem Königszapfen drehen kann. Mittels einer Sensoreinheit wird dann die Relativdrehung zwischen Sensorscheibe und Königszapfen erfasst, wodurch auch die Relativdrehung zwischen Zugfahrzeug und Sattelauflieger ermittelt werden kann.

Bei einer weiteren Ausführungsform der EP 2 899 101 A1 weist der Königszapfen ein Zahnrad auf, welches in ein Zahnrad der Sattelkupplung eingreift, wenn Zugfahrzeug und Sattelauflieger gekoppelt sind. Die Rotation des Zahnrads der Sattelkupplung wird erfasst, wodurch eine relative Rotation zwischen Zugfahrzeug und Sattelauflieger ermittelt werden kann.

Den Lösungen aus dem Stand der Technik ist gemein, dass ein Königszapfen mit einer besonderen, an die jeweilige Lösung angepassten Ausgestaltung des notwendig ist. Es wäre jedoch wünschenswert, wenn der Knickwinkel auch bei Aufliegern mit standardisierten Königszapfen erfasst werden könnte.

Weitere Systeme zum Erfassen des Knickwinkels sind aus der US 5,152,544, der DE 199 64 045 A1 und der WO 2020/248035 A1 bekannt. Diese Systeme sind jedoch komplex und führen nicht zu präzisen Messungen des Knickwinkels.

Die DE 10 2018 123 644 A1 betrifft eine Sensorvorrichtung mit einer Schwenklageranordnung.

Die DE 10 2018 116 192 A1 betrifft eine Zugfahrzeugkupplung-Sensorvorrichtung mit reibschlüssigem Mitnehmer.

Es ist daher Aufgabe der Erfindung, ein System bereit zu stellen, mittels dem der Knickwinkel zwischen Zugfahrzeug und Sattelauflieger präzise ermittelt werden kann.

Die Aufgabe wird durch das erfindungsgemäße Sattelkupplungssystem gelöst.

Das Sattelkupplungssystem weist einen Unterbau, eine Sattelkupplungsplatte und eine Winkelmesseinrichtung auf. Unterbau und Sattelkupplungsplatte bilden gemeinsam eine Sattelkupplung aus. Die Sattelkupplungsplatte weist eine in Fahrtrichtung F passierbare Einfahröffnung für einen Königszapfen eines Sattelaufliegers und eine in Fahrtrichtung F an die Einfahröffnung anschließende Bucht für den Königszapfen auf. Die Winkelmesseinrichtung weist einen Rotor und einen Sensor auf, wobei der Rotor derart gelagert ist, dass er relativ zu dem Sensor um eine Drehachse D drehbar ist, und wobei der Sensor eingerichtet ist, eine Rotation des Rotors um die Drehachse D relativ zu dem Sensor zu erfassen. Der Rotor oder der Sensor umfasst einen Kopplungsmagneten, mittels dem der Rotor oder der Sensor lösbar (also temporär) mit dem Königszapfen verbindbar ist. Die Winkelmesseinrichtung weist mindestens einen Freiheitsgrad gegenüber dem Unterbau und/oder der Sattelkupplungsplatte auf.

Der Erfindung liegt die Erkenntnis zugrunde, dass die mangelnde Genauigkeit bisheriger Systeme unter anderem aus Relativbewegungen und -drehungen zwischen Bestandteilen der Winkelmesseinrichtung resultiert. Im Falle der US 5,152,544 beispielsweise ist der Sensor am Chassis des Zugfahrzeugs angebracht, wohingegen der Rotor in Form eines Magneten an dem Königszapfen hängt. Es hat sich gezeigt, dass die Bewegungen des Sattelaufliegers während der Fahrt bei bisherigen Systemen dazu führen, dass sich Magnet und Sensor nicht nur um die Drehachse D relativ zueinander drehen, sondern sich beispielsweise auch lateral zueinander bewegen. Derartige Bewegungen führen zu Messfehlern des Sensors, wodurch die Messergebnisse des Knickwinkels ungenau oder gänzlich falsch sind.

Die erfindungsgemäße Lösung sieht vor, dass die Winkelmesseinrichtung mindestens einen Freiheitsgrad gegenüber dem Unterbau und/oder der Sattelkupplungsplatte - mit anderen Worten gegenüber der Sattelkupplung - aufweist. Bewegungen/Drehungen des Sattelaufliegers relativ zum Zugfahrzeug führen zu elastischen Verformungen von Sattelkupplungsplatte und/oder Unterbau sowie zu Bewegungen/Drehungen des Königszapfens innerhalb der Bucht der Sattelkupplungsplatte. Jeder Freiheitsgrad führt dazu, dass eine elastische Verformung oder Bewegung/Drehung entlang des Freiheitsgrades keinen Einfluss auf die Relativposition und -orientierung von Sensor und Rotor hat. Sensor und Rotor folgen in dem jeweiligen Freiheitsgrad gemeinsam der Bewegung des Königszapfens. Dadurch werden Messfehler vermieden und es erfolgt eine präzisere Messung des Knickwinkels.

Die Freiheitsgrade sind insbesondere eine Bewegung entlang einer Querachse Q und/oder eine Bewegung entlang einer Längsachse L und/oder eine Bewegung entlang einer Hochachse H und/oder eine Drehung um die Querachse Q (Kippen) und/oder eine Drehung um die Längsachse L (Wanken). Die Längsachse L verläuft bei Geradeausfahrt in Fahrtrichtung F des Sattelzugs. Die Hochachse H verläuft entlang der Gravitationsrichtung. Die Querachse Q verläuft senkrecht zur Längsachse L und zur Hochachse H. Freiheitsgrade entlang der Querachse Q und der Längsachse L gleichen insbesondere Bewegungen des Königszapfens aufgrund von Toleranzen und Abnutzungserscheinungen aus. Die Freiheitsgrade entlang der Hochachse H und um die Drehachse Q sowie um die Drehachse L gleichen insbesondere Bewegungen des Königszapfens auf unebenen Strecken (Schlechtwegstrecken) und Schwingungen/Verformungen der Aufliegerplatte aus.

Die Winkelmesseinrichtung kann an dem Unterbau und/oder der Sattelkupplungsplatte angebracht sein. Bevorzugt wird dabei eine Anordnung an dem Unterbau, da der Unterbau weniger Bewegungen gegenüber dem Chassis des Zugfahrzeugs vollführt.

Vorteilhafterweise weist der Unterbau mindestens zwei Lagerböcke auf. Der Unterbau umfasst insbesondere zwei Lagerböcke und eine die Lagerböcke entlang der Querachse Q verbindende Traverse. Die Winkelmesseinrichtung kann an den Lagerböcken und/oder an der Traverse angeordnet sein. Die Anordnung an der Traverse ermöglicht dabei eine zentrale Anordnung der Winkelmesseinrichtung, wodurch der konstruktive Aufwand verringert wird.

Die Sattelkupplungsplatte ist bevorzugt derart mit dem Unterbau, insbesondere den Lagerböcken verbunden, dass sie um die Längsachse L und/oder um die Querachse Q relativ zu dem Unterbau oder den Lagerböcken eine Kippbewegung ausführen kann. Diese Kippbewegungen sind insbesondere bei Schlechtwegstrecken vorteilhaft. Die damit einhergehenden Bewegungen des Königszapfens werden erfindungsgemäß dadurch ausgeglichen, dass die Winkelmesseinrichtung gegenüber dem Unterbau und/oder der Sattelkupplungsplatte einen Freiheitsgrad aufweist, der eine Drehung um die Querachse Q und/oder eine Drehung um die Längsachse L ermöglicht.

Um der Winkelmesseinrichtung als Ganzer die gewünschten Freiheitsgrade zu gewähren, umfasst die Winkelmesseinrichtung bei vorteilhaften Weiterbildungen eine Halterung, an welcher der Sensor ortsfest angeordnet und in welcher der Rotor drehbar gelagert ist, wobei die Halterung verschiebbar und/oder drehbar mit dem Unterbau und/oder der Sattelkupplungsplatte verbunden ist.

Der Sensor ist vorzugsweise ein magnetischer Winkelsensor. Der Rotor kann vollständig aus dem Kopplungsmagneten bestehen, der in der Halterung rotierbar gelagert ist. Der Sensor kann eingerichtet sein, eine Rotation des Kopplungsmagneten direkt zu erfassen. Alternativ kann der Sensor einen Sensormagneten umfassen, welcher mit dem Kopplungsmagneten des Rotors gekoppelt ist und welcher bei einer Rotation des Kopplungsmagneten ebenfalls rotiert. Der Sensor ist dann dazu eingerichtet, eine Rotation des Kopplungsmagneten zu erfassen, indem die Rotation des Sensormagneten erfasst wird.

Alternativ kann der Rotor eine Welle umfassen, an welcher der Kopplungsmagnet angebracht ist. Die Welle ist in der Halterung rotierbar gelagert und verläuft bis zu dem Sensor. Der Sensor ist bei dieser Ausführungsform dazu eingerichtet, eine Rotation der Welle zu erfassen. Hierzu kann ein Sensormagnet an der Welle angeordnet sein, dessen Rotation von dem Sensor erfasst wird. Die Rotation der Welle kann aber auch auf andere Weise von dem Sensor erfasst werden, beispielsweise auf optischem Wege, insbesondere mittels auf der Welle angeordneter Markierungen.

Bei der Gewährung von Freiheitsgraden bedeutet einerseits jeder zusätzliche Freiheitsgrad eine kompliziertere Konstruktion. Andererseits ermöglicht es jeder Freiheitsgrad, eine Störquelle für die Messung des Knickwinkels auszuschalten. Daher ist es von Vorteil, eine Abwägung bei der Gewährung von Freiheitsgraden zu treffen. Das Gleiche gilt auch für die dazugehörige Dimensionierung. Ein Freiheitsgrad kann prinzipiell unbegrenzt gewährt werden, beispielsweise durch ein Kugellager. Je umfassender der Freiheitsgrad jedoch gewährt wird, umso komplizierter ist in der Regel die konstruktive Umsetzung. Es hat sich gezeigt, dass die Relativbewegungen zwischen Auflieger und Zugfahrzeug während der Fahrt nicht sehr groß sind, wenngleich sie ausreichen, um zu den oben erwähnten Messfehlern zu führen. Bevorzugt ermöglicht der Freiheitsgrad entlang der Querachse Q eine Bewegung auf einer Länge von > 0 mm bis 30 mm, insbesondere zwischen 10 und 30 mm. Der Freiheitsgrad entlang der Längsachse L ermöglicht bevorzugt eine Bewegung auf einer Länge von > 0 mm bis 40 mm, insbesondere zwischen 10 und 40 mm. Der Freiheitsgrad entlang der Hochachse H ermöglicht bevorzugt eine Bewegung auf einer Länge von > 0 mm bis 50 mm, insbesondere zwischen 10 und 50 mm. Der Freiheitsgrad um die Querachse Q ermöglicht bevorzugt eine Drehung um einen Winkel von > 0° bis 30°, insbesondere zwischen 10° und 25°. Der Freiheitsgrad um die Längsachse L ermöglicht bevorzugt eine Drehung um die Längsachse L um einen Winkel von > 0° bis 15°. Das bedeutet, dass sich die Messeinrichtung bei einer beispielhaften Ausführungsform entlang der Querachse Q auf einer Strecke von insgesamt 20 mm, entlang der Längsachse L auf einer Strecke von insgesamt 30°mm und entlang der Hochachse H auf einer Strecke von 10 mm relativ zu der Sattelkupplungsplatte bewegen kann.

Die Freiheitsgrade entlang der Querachse Q, Hochachse H und Längsachse L können beispielsweise jeweils durch eine Linearführung mit Anschlägen, beispielsweise durch ein Langloch, bewirkt werden. Der Freiheitsgrad um die Querachse Q und der Freiheitsgrad um die Längsachse L können beispielsweise durch ein Scharnier mit Anschlägen bewirkt werden.

Wie bereits beschrieben, können Relativbewegungen zwischen Sensor und Rotor zu Messfehlern führen. Bei vorteilhaften Weiterbildungen ist daher vorgesehen, dass der Rotor und der Sensor derart miteinander verbunden sind, dass eine translatorische Relativbewegung zwischen Rotor und Sensor entlang der Drehachse D verhindert wird. Der Rotor und der Sensor sind also in einem definierten, unveränderbaren Abstand voneinander angeordnet. Bei besonders vorteilhaften Weiterbildungen weisen Rotor und Sensor nur einen Freiheitsgrad zueinander auf, nämlich den einer Drehung um die Drehachse D.

Der Königszapfen fährt beim Kupplungsvorgang in einen Einfahrraum ein, jedoch nicht immer auf der gleichen Höhe. Auch seitliche Abweichungen sind aufgrund von Verschleiß und Toleranzen möglich. Dadurch besteht die Gefahr, dass es zu einer Beschädigung des Rotors oder des Sensors kommt. Alternativ kann daher vorgesehen sein, dass eine translatorische Relativbewegung zwischen Rotor und Sensor entlang der Drehachse D bis zu einem definierten Abstand ermöglicht wird. Der Rotor bzw. der Sensor kann sich dann beispielsweise außerhalb des Einfahrraums befinden, wenn sich kein Königszapfen in dem Einfahrraum befindet. Dadurch wird der Rotor oder der Sensor vor Beschädigung durch den einfahrenden Königszapfen geschützt. In diesem Fall können Rotor und Sensor beispielsweise in einem Ausgangszustand unmittelbar aufeinanderliegen. Nach dem Einfahren des Königszapfens in den Einfahrraum der Sattelkupplung wird der Rotor bzw. der Sensor mittels des Kopplungsmagneten in Richtung des Königszapfens gezogen, aber nur bis zu dem definierten Abstand. Ein solcher Abstand kann beispielsweise durch eine Linearführung mit einem Anschlag erzielt werden. Da der Abstand durch die Konstruktion definiert wird, stellt er sich bei bestimmungsgemäßem Gebrauch immer ein und kann demnach bei der Auswertung des Sensorsignals berücksichtigt werden. Durch den festgelegten Abstand kann verhindert werden, dass der Kopplungsmagnet mit dem Königszapfen in Kontakt kommt. Dadurch kann der Königszapfen später aus der Sattelkupplung gefahren werden, ohne dass die Winkelmesseinrichtung beschädigt wird.

Ist eine translatorische Relativbewegung zwischen Rotor und Sensor entlang der Drehachse D vorgesehen, so ist vorteilhafterweise eine Rückhaltefeder vorgesehen, die einer zunehmenden Beabstandung (Auseinanderbewegung) von Rotor und Sensor entgegenwirkt. Bei derartigen Ausführungsformen weisen Rotor und Sensor in einem Ausgangszustand einen vordefinierten Abstand zueinander auf und können sich bei eingefahrenem Königszapfen aufgrund der magnetischen Anziehung zwischen Kopplungsmagneten und Königszapfen gegen die Federkraft der Rückhaltefeder auseinander bewegen. Wird der Königszapfen aus der Sattelkupplung entfernt, so zieht die Rückhaltefeder den Rotor bzw. den Sensor zurück in den Ausgangszustand.

Die Halterung kann entweder direkt oder über weitere Bauteile, insbesondere einem Arm, mit dem Unterbau und/oder der Sattelkupplungsplatte verbunden sein. Ist die Halterung direkt mit dem Unterbau und/oder der Sattelkupplungsplatte verbunden, so wird der mindestens eine Freiheitsgrad bevorzugt durch eine entsprechende Lagerung der Halterung an dem Unterbau und/oder an der Sattelkupplungsplatte erzielt. Ist ein Arm vorhanden, so kann ein Freiheitsgrad entweder zwischen Halterung und Arm oder zwischen Arm und Unterbau bzw. Sattelkupplungsplatte erzielt werden. Besonders bevorzugt wird mindestens ein Freiheitsgrad zwischen Halterung und Arm erzielt und mindestens ein anderer Freiheitsgrad zwischen Arm und Unterbau bzw. Sattelkupplungsplatte.

Jeder Freiheitsgrad wird bevorzugt durch eine entsprechende Lagerung erzielt. Die zwei Bauteile, insbesondere Halterung, Arm, Sattelkupplungsplatte und/oder Unterbau, welche den Freiheitsgrad bewirken, sind also bevorzugt relativ zueinander verschiebbar und/oder drehbar angeordnet. Die Bauteile sind bevorzugt ferner mittels Federkraft entgegen ihrer Verschiebbarkeit und/oder Drehbarkeit vorgespannt. Auf diese Weise werden die Bauteile in einer Ausgangsposition bzw. Ausgangsorientierung gehalten. So kann unter anderem verhindert werden, dass die Winkelmesseinrichtung beim Kupplungsvorgang mit dem Königszapfen kollidiert und beschädigt wird. Die Bauteile können auch durch mehrere Federn in einer Ausgangsposition bzw. Ausgangsorientierung gehalten werden, wobei dann eine Bewegung/Drehung aus der Ausgangsposition bzw. Ausgangsorientierung in zwei Richtungen gegen Federkraft möglich ist. Fährt ein Königszapfen in die Sattelkupplung ein, so wird die Winkelmesseinrichtung oder der jeweilige Teil aus der Ausgangsposition entlang des Freiheitsgrades bewegt, aber bevorzugt nicht über die gesamte Länge/Drehung des Freiheitsgrades, sondern nur in eine Betriebsposition. Sind Zugfahrzeug und Sattelauflieger gekoppelt, so befindet sich die Winkelmesseinrichtung demnach in der Betriebsposition. Kommt es anschließend bei der Fahrt zu Bewegungen des Königszapfens entlang des jeweiligen Freiheitsgrades, so wird die Winkelmesseinrichtung oder der jeweilige Teil weiter entlang des Freiheitsgrades, also gegen die Federvorspannung, oder in umgekehrter Richtung bewegt. Wird der Sattelauflieger entkoppelt, der Königszapfen also aus der Sattelkupplung heraus bewegt, so wird die Winkelmesseinrichtung oder der jeweilige Teil wieder in die Ausgangsposition bewegt bzw. gedreht.

Die Halterung kann auch einteilig sein und mehrere Abschnitte umfassen, die über zumindest einen flexiblen Bereich miteinander verbunden und relativ zueinander bewegbar und/oder drehbar sind. Bei dieser Ausführung ist die Halterung bevorzugt direkt mit dem Unterbau und/oder der Sattelkupplungsplatte verbunden, wobei der Sensor ortsfest an der Halterung angeordnet ist und wobei der Rotor in der Halterung drehbar gelagert ist. Durch die Einteiligkeit können die Freiheitsgrade erzielt werden ohne dass zusätzlich nicht gewünschte Freiheitsgrade, beispielsweise durch toleranzbedingtes Spiel, gewährt werden.

Die Halterung und/oder der Arm bestehen bevorzugt zumindest teilweise, insbesondere vollständig, aus einem nicht-magnetisierbaren Material, insbesondere aus Aluminium, Magnesium, Messing, (Faser-)Verbundwerkstoff und/oder Polymer. Dadurch wird vermieden, dass die Halterung und/oder der Arm die Sensorik stört, also das Messergebnis des Sensors beeinträchtigt. Zudem muss dann bei der konstruktiven Ausgestaltung von Halterung und Arm nicht darauf geachtet werden, dass die Bauteile die Sensorik möglichst wenig stören, da sie materialbedingt ohnehin zu keiner Beeinträchtigung führen.

Es hat sich herausgestellt, dass für die Erfassung des Knickwinkels eine möglichst zentrale Anordnung des Rotors an dem Königszapfens von Vorteil ist. Bei vorteilhaften Weiterbildungen weist die Winkelmesseinrichtung daher eine Zentrierhilfe auf, mittels welcher die Winkelmesseinrichtung und/oder der Rotor und/oder der Kopplungsmagnet beim Einfahren des Königszapfens positioniert werden. Die Zentrierhilfe kann demnach eine Mitnehmerfunktion ausüben. Der Königszapfen kommt während seines Kupplungsvorgangs mit der Zentrierhilfe in Kontakt und nimmt beim weiter fortschreitenden Kupplungsvorgang die Winkelmesseinrichtung mit. Dabei wird gleichzeitig die Position von Winkelmesseinrichtung und/oder Rotor und/oder Kopplungsmagnet zu dem Königszapfen korrekt eingestellt. Die Anordnung des Rotors an dem Königszapfen wird dadurch reproduzierbar, wodurch die Messergebnisse präziser werden. Die Zentrierhilfe weist bevorzugt mindestens einen Zentrierstift, insbesondere zwei Zentrierstifte, und/oder eine Zentrierkontur, beispielsweise eine Abkantung, auf. Die Zentrierkontur bietet die größtmögliche Anpassung an den Königszapfen, wodurch eine sehr präzise Messung ermöglicht wird.

Wie bereits erwähnt, hat es sich als vorteilhaft erwiesen, wenn der Kopplungsmagnet nicht in unmittelbaren Kontakt mit dem Königszapfen kommt. Bei unmittelbarem Kontakt ist die Haltekraft des Kopplungsmagneten am Königszapfen sehr groß, weshalb er sich beim Ausfahren des Königszapfens aus der Sattelkupplung nur schwer löst. Das kann zu Beschädigungen des Systems führen. Bei vorteilhaften Weiterbildungen ist daher vorgesehen, dass die Winkelmesseinrichtung mindestens einen Abstandshalter aufweist, insbesondere einen Vorsprung, der von der Halterung aus entlang der Hochachse H über den Kopplungsmagneten hinaus ragt und verhindert, dass der Kopplungsmagnet in direkten Kontakt mit dem Königszapfen kommt und/oder bewirkt, dass der Kopplungsmagnet in einem vordefinierten Abstand zu dem Königszapfen gehalten wird. Der Abstandshalter dient ferner als Schutz für den Kopplungsmagneten beim Ein- und Ausfahren des Königszapfens in/aus der Sattelkupplung.

Wie bereits erwähnt, ist es vorteilhaft, den Rotor und den Sensor vor Beschädigung durch einen einfahrenden Königszapfen zu schützen. Bei vorteilhaften Weiterbildungen weist die Winkelmesseinrichtung mindestens einen Schutzvorsprung zum Schutz der Winkelmesseinrichtung oder eines Teils davon gegen mechanische Beschädigung durch einen einfahrenden Königszapfen auf. Der Schutzvorsprung kann insbesondere als Rampe ausgebildet sein. Trifft der Königszapfen auf die Rampe, so drückt er die Winkelmesseinrichtung aus dem Weg, ohne sie zu beschädigen. Besonders vorteilhaft ist es, wenn der Schutzvorsprung sowohl in Einfahrrichtung als auch entgegen der Einfahrrichtung des Königszapfens als Rampe, also als Doppelrampe ausgebildet ist. Dadurch wird sowohl beim Einfahren wie auch beim Ausfahren die Winkelmesseinrichtung aus dem Weg gedrückt. Der Schutzvorsprung und der Abstandshalter können durch ein einziges Bauteil ausgebildet werden.

Die Aufgabe wird auch durch ein erfindungsgemäßes Zugfahrzeug für einen Sattelauflieger gelöst. Das Zugfahrzeug weist ein Chassis, ein Fahrwerk und ein Sattelkupplungssystem nach der obigen Beschreibung auf. Optional weist das Zugfahrzeug eine auf dem Chassis angeordnete Montageplatte auf. Die Montageplatte dient der Montage verschiedener Baugruppen, insbesondere der Sattelkupplung.

Bei dem erfindungsgemäßen Zugfahrzeug kann die Winkelmesseinrichtung eine Halterung umfassen, an welcher der Sensor angeordnet und in welcher der Rotor drehbar gelagert ist, wobei die Halterung verschiebbar und/oder drehbar mit dem Chassis und/oder der Montageplatte verbunden ist. Die Halterung wird bei dieser Ausführungsform also an dem Chassis oder der Montageplatte angebracht und ist dadurch mittelbar auch mit der Sattelkupplung verbunden. Durch die verschiebbare und/oder drehbare Anordnung weist die Winkelmesseinrichtung auch bei diesen Ausführungsformen gegenüber dem Unterbau und/oder der Sattelkupplungsplatte mindestens einen Freiheitsgrad auf. Auch bei diesen Ausführungsformen wird die Winkelmesseinrichtung als Ganze an den Königszapfen gekoppelt und kann dadurch Bewegungen und/oder Drehungen des Königszapfens folgen, sodass es insbesondere zu keinen lateralen Verschiebungen zwischen Rotor und Sensor kommt. Die Messung des Knickwinkels wird dadurch präziser.

Der Sensor ist vorteilhafterweise mit einer Steuereinheit des Zugfahrzeugs verbunden. Auf diese Weise kann der Sensor das Messsignal direkt an die Steuereinheit übermitteln. Daraufhin kann beispielsweise dem Fahrer der Knickwinkel angezeigt werden. Besonders vorteilhaft ist der Einsatz des erfindungsgemäßen Systems bei autonom fahrenden Sattelzügen. Dort kann die Steuereinheit das Messsignal des Sensors bei der Ansteuerung des Antriebs von Zugfahrzeug und/oder Sattelauflieger berücksichtigen.

Die Aufgabe der Erfindung wird auch durch einen Sattelzug mit einem Zugfahrzeug gemäß der obigen Beschreibung gelöst, wobei insbesondere der Rotor oder der Sensor mittels des Kopplungsmagneten lösbar mit dem Königszapfen verbunden ist.

Die Erfindung wird anhand der Zeichnungen beispielhaft dargestellt und beschrieben. Es zeigt:
- Figur 1: einen Sattelzug in einer Seitenansicht
- Figur 2a: eine Sattelkupplung in einer Draufsicht
- Figur 2b: eine Sattelkupplung in einer Rückansicht
- Figur 3: eine erste Ausführungsform eines erfindungsgemäßen Sattelkupplungssystem in einer teilweise schematischen Seitenansicht;
- Figur 4: eine zweite Ausführungsform eines erfindungsgemäßen Sattelkupplungssystem in einer teilweise schematischen Seitenansicht
- Figur 5: eine dritte Ausführungsform eines erfindungsgemäßen Sattelkupplungssystem in einer teilweise schematischen Seitenansicht

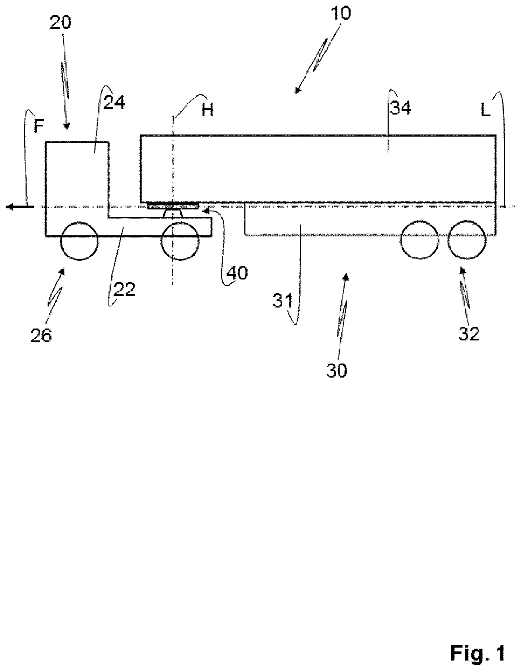

Die Figur 1 zeigt einen Sattelzug 10 mit einem Zugfahrzeug 20 und einem Sattelauflieger 30. Das Zugfahrzeug weist ein Chassis 22, ein Fahrerhaus 24 sowie ein Fahrwerk 26 auf. Auf dem Chassis 22 ist eine Sattelkupplung 40 angeordnet. Der Sattelauflieger 30 umfasst ein Fahrgestell 31, ein Fahrwerk 32 sowie einen Aufbau 34. Gezeigt sind ferner eine Hochachse H, die in Gravitationsrichtung verläuft, sowie eine Längsachse L, die in Fahrtrichtung F verläuft.

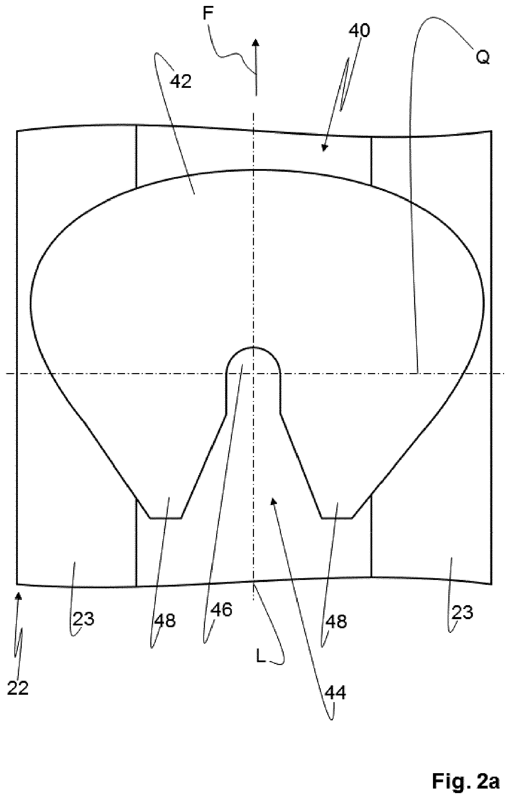

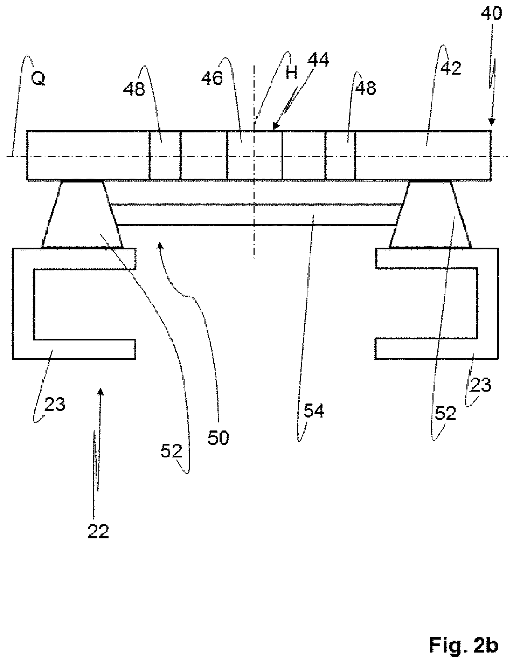

In den Figuren 2a und 2b ist die Sattelkupplung 40 der Figur 1 näher dargestellt. Die Sattelkupplung 40 weist eine Sattelkupplungsplatte 42 auf. Die Sattelkupplungsplatte 42 weist eine in Fahrtrichtung F passierbare Einfahröffnung 44 auf, an die sich eine Bucht 46 anschließt. Die Einfahröffnung 44 wird von zwei Hörnern 48 definiert. Zum Kuppeln von Zugfahrzeug 20 und Sattelauflieger 30 fährt ein Königszapfen (hier nicht dargestellt) entlang der Längsachse L in die Einfahröffnung 44 ein und weiter bis in die Bucht 46. Dort wird der Königszapfen verriegelt.

Wie aus Figur 2b ersichtlich ist, weist die Sattelkupplung 40 einen Unterbau 50 bestehend aus zwei Lagerböcken 52 und einer die Lagerböcke 52 verbindenden, entlang der Querachse Q verlaufenden Traverse 54 auf. Die Lagerböcke 52 sind jeweils auf einem Längsträger 23 des Chassis 22 angeordnet. Die Sattelkupplungsplatte 42 ist auf den Lagerböcken 52 befestigt.

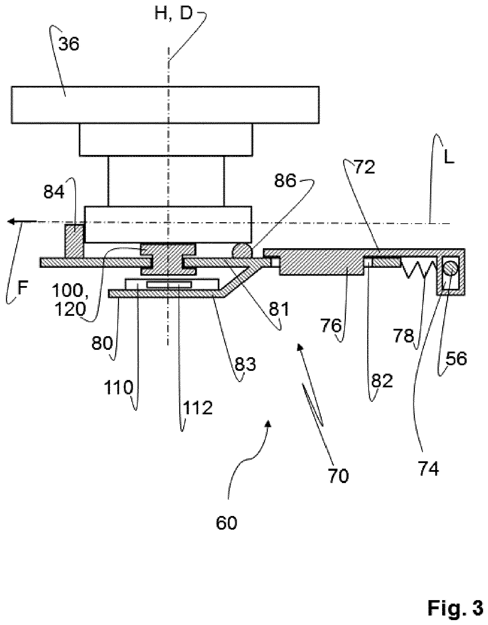

Die Figuren 3, 4 und 5 zeigen verschiedene Ausführungsformen von Sattelkupplungssystemen 60, die jeweils auf Basis der Sattelkupplung 40 der Figuren 2a, 2b ausgeführt werden können.

Das Sattelkupplungssystem 60 der Figur 3 weist eine Winkelmesseinrichtung 70 auf. Die Winkelmesseinrichtung 70 umfasst einen Arm 72, der an einem Führungsstab 56 geführt ist, sowie eine Halterung 80. Der Führungsstab 56 ist an der in Figur 3 nicht dargestellten Traverse 54 des Unterbaus 50 der Sattelkupplung 40 befestigt. Der Arm 72 kann entlang der Querachse Q, also senkrecht zur Zeichenebene, translatorisch relativ zu dem Führungsstab 56 bewegt werden.

Der Führungsstab 56 ist im Querschnitt rund. Der Arm 72 weist einen im Querschnitt rechteckigen, entlang der Querachse Q verlaufenden Führungsdurchgang 74 auf, der den Führungsstab 56 aufnimmt. Dadurch ist der Arm 72 um die Querachse Q relativ zu dem Führungsstab 56 drehbar. Gleichzeitig kann der Arm 72 aufgrund der Geometrie des Führungsdurchgangs 74 entlang der in Gravitationsrichtung verlaufenden Hochachse H relativ zu dem Führungsstab 56 bewegt werden.

Der Arm 72 und der Führungsstab 56 weisen also drei Freiheitsgrade zueinander auf: Bewegung entlang der Querachse Q, Drehung um die Querachse Q, Bewegung entlang der Hochachse H. Alle drei Freiheitsgrade sind begrenzt, wobei die Begrenzung der Drehung um die Querachse Q durch einen Anschlag realisiert wird, der hier nicht dargestellt ist. Da der Führungsstab 56 fest mit der Traverse 54 verbunden ist, weist die Winkelmesseinrichtung 70 insgesamt die gleichen drei Freiheitsgrade relativ zu dem Unterbau 50 der Sattelkupplung 40 auf.

Der Arm 72 umfasst ferner einen Führungsblock 76, der in einer Längsführung 82 der Halterung 80 entlang der Längsachse L geführt ist. Entlang der Hauptachse H sind die Halterung 80 und der Arm 72 nicht relativ zueinander bewegbar. Die Halterung 80 weist also einen einzigen Freiheitsgrad gegenüber dem Arm 72 auf, nämlich die Bewegung in Längsrichtung L. Folglich weist die Winkelmesseinrichtung 70 den gleichen Freiheitsgrad relativ zu dem Unterbau 50 der Sattelkupplung 40 auf.

Zwischen dem Arm 72 und der Halterung 80 ist eine Feder 78 angeordnet, welche den Arm 72 und die Halterung 80 entgegen ihrer Verschiebbarkeit vorspannt. Ist kein Königszapfen 36 in der Bucht 46 angeordnet, so wird die Halterung 80 von der Feder 78 in eine Ausgangsposition nach rechts gezogen.

Die Halterung 80 ist im vorderen Bereich gegabelt und weist einen obere Halterteil 81 und einen unteren Halterteil 83 auf. Die Halterteile 81, 83 sind nicht relativ zueinander bewegbar oder drehbar.

Die Winkelmesseinrichtung 70 weist ferner einen Rotor 100 und einen Sensor 110 auf. Der Sensor 110 ist ortsfest an dem unteren Halterteil 83 angeordnet, der Rotor 100 ist um eine Drehachse D drehbar in dem oberen Halterteil 81 gelagert. Rotor 100 und Sensor 110 sind derart angeordnet, dass der Sensor 110 eine Drehung des Rotors 100 um die Drehachse D detektieren kann. Bei der gezeigten Ausführungsform ist der Sensor 110 vertikal unterhalb des Rotors 100 angeordnet.

Der Rotor 100 umfasst einen Kopplungsmagneten 120, mittels dem der Rotor 100 lösbar mit einem Königszapfen 36 des Sattelaufliegers 30 verbindbar ist. Befindet sich ein Königszapfen 36 wie hier dargestellt in der Bucht 46 der Sattelkupplung 40, so wird der Rotor 100 mittels des Kopplungsmagneten 120 an dem Königszapfen befestigt und führt sämtliche Bewegungen des Königszapfens 36 innerhalb der Bucht 46 ebenfalls aus.

Bei der Ausführungsform gemäß Figur 3 besteht der Rotor 100 vollständig aus dem Kopplungsmagneten 120. Der Sensor 110 weist ferner einen Sensormagneten 112 auf, der bei einer Drehung des Kopplungsmagneten 120 mitgedreht wird.

Der Rotor 100 weist in vertikaler Richtung Spiel auf, ist aber in seiner Bewegung begrenzt. Befindet sich ein Königszapfen 36 in der Bucht 46, so wird der Rotor durch die Anziehungskraft zwischen Kopplungsmagnet 120 und Königszapfen 36 nach oben bis zum Anschlag gezogen. Der Kopplungsmagnet 120 befindet sich dadurch in einer vordefinierten Position relativ zum Sensor 110.

Dreht sich der Königszapfen 36 um die Hochachse H, so dreht sich der Rotor 100 ebenfalls und mit ihm der Sensormagnet 112, was von dem Sensor 110 als Knickwinkel detektiert und beispielsweise an eine Steuereinheit des Zugfahrzeugs 20 übermittelt werden kann. Bewegungen des Königszapfens 36 entlang der Längsachse L, der Querachse Q und der Hochachse H sowie ein Kippen des Königszapfens 36 um die Querachse Q werden durch die erwähnten Freiheitsgrade insofern ausgeglichen, als dass keine entsprechende Relativbewegung oder -drehung zwischen Rotor 100 und Sensor 110 erfolgt. Dadurch kommt es zu geringeren Abweichungen bei der Messung der Drehung um die Drehachse D, was insgesamt zu einer präziseren Messung des Knickwinkels führt.

Die Winkelmesseinrichtung 70 weist ferner eine Zentrierhilfe in Form mehrerer Zentrierstift 84 auf, mittels dem die Winkelmesseinrichtung 70 beim Einfahren des Königszapfens positioniert wird. Von den Zentrierstiften 84 ist nur einer sichtbar. Die Zentrierstifte 84 sind auf einem ausgehend von dem Rotor 100 in Fahrtrichtung F liegenden Abschnitt der Halterung 80 angeordnet und stehen von dieser nach oben weg.

Die Winkelmesseinrichtung 70 weist ferner einen Schutzvorsprung 86 zum Schutz der Winkelmesseinrichtung 70 gegen mechanische Beschädigung durch einen einfahrenden Königszapfen 36 auf. Der Schutzvorsprung 86 ist auf einem ausgehend von dem Rotor 100 entgegen der Fahrtrichtung liegenden Abschnitt der Halterung 80 angeordnet und steht von der Halterung 80 nach oben weg.

In einem Ausgangszustand befindet sich kein Königszapfen 36 in der Sattelkupplung 40. Die Halterung 80 wird von der Feder 78 nach rechts, also entgegen der Fahrtrichtung F gezogen und liegt am vorderen Ende des Führungsblocks 76 an. Der Rotor 100 liegt auf der Halterung 80 auf, befindet sich also in seiner unteren Extremposition.

Fährt nun ein Königszapfen 36 wir oben beschrieben in Fahrrichtung F in die Einfahröffnung 44 und weiter in die Bucht 46 ein, so trifft er zunächst auf den Schutzvorsprung 86, falls die Halterung 80 etwas nach oben geneigt ist oder der Königszapfen 36 aufgrund von Toleranzen weiter nach unten ragt, als es in der Figur 3 dargestellt ist. Der Königszapfen 36 drückt die Halterung 80 dann mittels des Schutzvorsprungs 86 aus dem Weg und fährt weiter bis er an die Zentrierstifte 84 stößt. Dort wird die Halterung 80 mittels der Zentrierstifte relativ zu dem Königszapfen 36 ausgerichtet. Dadurch wird auch der Rotor 100 exakt mittig unter dem Königszapfen 36 positioniert. Der Rotor 100 wird aufgrund der Anwesenheit des Königszapfens 36 nach oben in seine obere Extremposition bewegt. Die Halterung 80, der Rotor 100 und der Schutzvorsprung 86 sind derart ausgelegt, dass der Rotor 100 den Königszapfen 36 nicht berührt, sondern in seiner oberen Extremposition einen Abstand zu dem Königszapfen 36 aufweist. Der Schutzvorsprung 86 wirkt dabei als Abstandshalter. Das erleichtert das spätere Ausfahren des Königszapfens 36 aus der Sattelkupplung 40, da sich der Rotor 100 dann nicht von dem Königszapfen 36 lösen muss.

Der Königszapfen 36 bewegt sich beim Einfahren in die Sattelkupplung 40 weiter in der Fahrtrichtung F, bis er an den Rand der Buchs 46 stößt, was toleranzbedingt zu unterschiedlichen Zeitpunkten geschieht. Bis dorthin nimmt der Königszapfen 36 die Halterung 80 mit, wodurch die Feder 78 gespannt wird. Die Zentrierstifte 84 wirken dabei als Mitnehmer. Die Halterung 80 befindet sich dann in der dargestellten Betriebsposition.

Die Winkelmessvorrichtung 70 ist unmittelbar einsatzbereit und erfasst jede Drehung des Königszapfens 36 um die Drehachse D mittels des Rotors 100 und des Sensors 110. Bewegungen des Königszapfens 36 entlang der Längsachse L, der Hochachse H oder der Querachse Q werden durch die Winkelmessvorrichtung 70 genauso ausgeglichen wie eine Drehung des Königszapfens 36 um die Querachse Q. Aus der Betriebsposition kann die Halterung 80 beispielsweise entlang der Längsachse L sowohl in die eine wie auch in die entgegengesetzte Richtung bewegt werden, um entsprechende Bewegungen des Königszapfens 36 auszugleichen. Diese Bewegungen und die Drehung wirken sich dadurch nicht nachteilig auf die Erfassung des Knickwinkels aus.

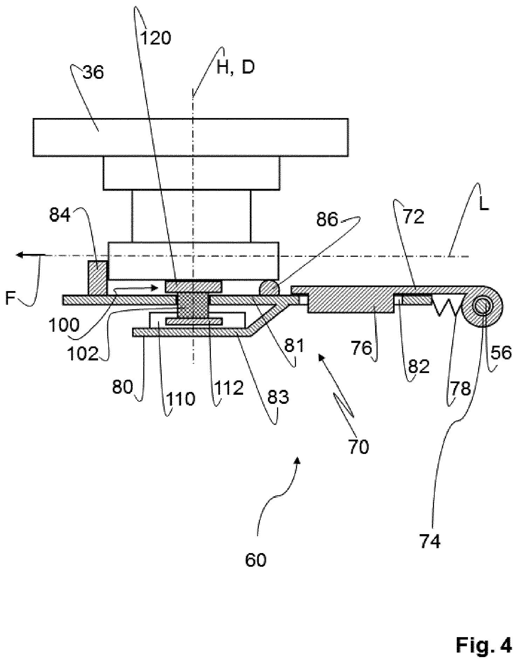

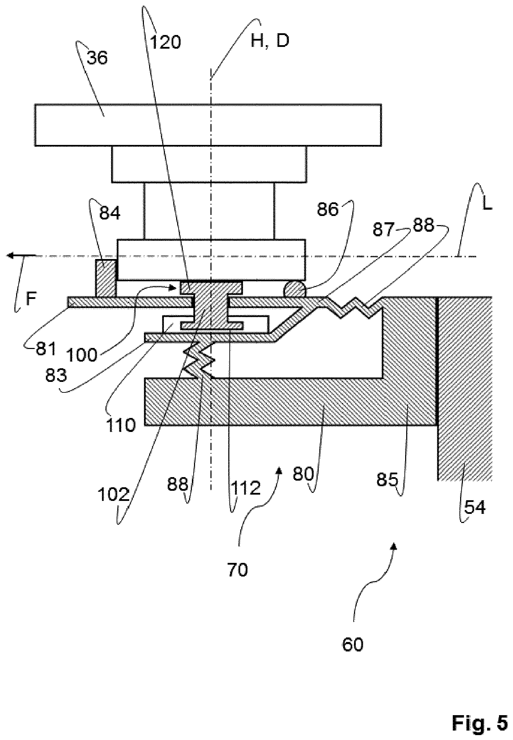

Die in Figur 4 und 5 dargestellten Ausführungsform des erfindungsgemäßen Sattelkupplungssystems 60 sind in Teilen identisch mit der Ausführungsform der Figur 3. Im Folgenden wird hauptsächlich auf die wesentlichen Unterschiede eingegangen.

Das Sattelkupplungssystem 60 der Figur 4 weist ebenfalls eine Winkelmesseinrichtung 70 mit einem Arm 72 auf, wobei der Arm 72 an einem Führungsstab 56 geführt ist. Der Führungsstab 56 ist erneut an einer hier nicht dargestellten Traverse 54 des Unterbaus 50 der Sattelkupplung 40 befestigt. Der Arm 72 kann entlang der Querachse Q, also senkrecht zur Zeichenebene, translatorisch relativ zu dem Führungsstab 56 bewegt werden.

Der Führungsstab 56 ist auch hier im Querschnitt rund. Bei der Ausführungsform der Figur 4 weist der Arm 72 einen im Querschnitt runden, entlang der Querachse Q verlaufenden Führungsdurchgang 74 auf, der den Führungsstab 56 aufnimmt. Dadurch ist der Arm 72 um die Querachse Q zwar relativ zu dem Führungsstab 56 drehbar, eine Relativbewegung entlang der Hochachse H ist jedoch nicht möglich.

Der Arm 72 und der Führungsstab 56 weisen also zwei Freiheitsgrade zueinander auf: Bewegung entlang der Querachse Q und Drehung um die Querachse Q. Beide Freiheitsgrade sind auch hier begrenzt, wobei die Begrenzung der Drehung um die Querachse Q durch einen Anschlag realisiert wird, der hier nicht dargestellt ist. Da der Führungsstab 56 fest mit der Traverse 54 verbunden ist, weist die Winkelmesseinrichtung 70 insgesamt die gleichen zwei Freiheitsgrade relativ zu dem Unterbau 50 der Sattelkupplung 40 auf.

Die Führung zwischen Halterung 80 und Arm 72 ist identisch zu jener der Figur 3. Gleiches gilt auch für die Feder 78, den Schutzvorsprung 86 sowie die Zentrierstifte 84. Auch ist die Halterung 80 gabelförmig und weist einen oberen Halterteil 81 und einen unteren Halterteil 83 auf.

Der Rotor 100 ist hier dreiteilig und weist eine Welle 102 auf, an welcher der Kopplungsmagnet 120 angebracht ist. Die Welle 102 ist in dem oberen Halterteil 81 gelagert und verläuft bis zu dem Sensor 110. Der Sensormagnet 112 ist auch an der Welle 102 angeordnet und dreht mit ihr mit. Der Sensor 110 ist dazu eingerichtet, eine Rotation des Sensormagneten 112 und damit eine Rotation der Welle 102, des Kopplungsmagneten 120 und des Königszapfens 36 zu erfassen. Die Welle 102 ist in vertikaler Richtung fixiert, kann sich also nicht relativ zu dem Sensor 110 entlang der Hochachse H bewegen.

Bei der Ausführungsform gemäß Figur 5 ist die Halterung 80 unmittelbar mit der Traverse 54 verbunden. Die Halterung 80 umfasst eine L-förmige Basis 85, die beispielsweise mittels Schrauben an der Traverse 54 ortsfest angebracht sein kann.

Die Halterung 80 weist ferner einen gabelförmigen Abschnitt 87 auf, der den oberen Halterteil 81 und den unteren Halterteil 83 umfasst. Der gabelförmige Abschnitt 87 ist über flexible Bereiche 88 mit der Basis 85 verbunden. Durch die konstruktive Ausgestaltung der flexiblen Bereiche 88 sind der gabelförmige Abschnitt 87 und die Basis 85 relativ zueinander bewegbar und drehbar. Dadurch weisen der gabelförmige Abschnitt 87 und die Basis 85 zueinander mehrere Freiheitsgrade auf, die je nach Ausgestaltung der flexiblen Bereiche 88 unterschiedlich sein können. Bei der dargestellten Ausführungsform sind der gabelförmige Abschnitt 87 und die Basis 85 relativ zueinander entlang der Hochachse H und entlang der Längsachse L bewegbar. Zudem können der gabelförmige Abschnitt 87 und die Basis 85 um die Querachse Q zueinander gedreht/gekippt werden.

An dem oberen Halterteil 81 sind erneut ein Sicherungsvorsprung 86 und Zentrierstifte 84 angeordnet.

Der Rotor 100 ist einteilig und bildet den Kopplungsmagneten 120, die Welle 102 und den Sensormagneten 112 aus. Der Sensor 110 ist eingerichtet, eine Rotation des Rotors 100 um die Drehachse D zu erfassen. Dadurch kann beispielsweise in der Steuereinheit des Zugfahrzeugs 20 der Knickwinkel bestimmt werden. Bewegungen entlang der Hochachse H und entlang der Längsachse L sowie eine Drehung um die Querachse Q des Königszapfens 36 werden durch die Winkelmesseinrichtung 70 ausgeglichen und beeinträchtigen die Messung des Sensors 110 nicht. Der Knickwinkel kann dadurch präzise ermittelt werden.

### Bezugszeichenliste

- 10: Sattelzug

- 20: Zugfahrzeug
- 22: Chassis
- 23: Längsträger
- 24: Fahrerhaus
- 26: Fahrwerk

- 30: Sattelauflieger
- 31: Fahrgestell
- 32: Fahrwerk
- 34: Aufbau
- 36: Königszapfen

- 40: Sattelkupplung
- 42: Sattelkupplungsplatte
- 44: Einfahröffnung
- 46: Bucht
- 48: Horn

- 50: Unterbau
- 52: Lagerbock
- 54: Traverse
- 56: Führungsstab

- 60: Sattelkupplungssystem

- 70: Winkelmesseinrichtung
- 72: Arm
- 74: Führungsdurchgang
- 76: Führungsblock
- 78: Feder

- 80: Halterung
- 81: oberer Halterteil
- 82: Längsführung
- 83: unterer Halterteil
- 84: Zentrierstift
- 85: Basis
- 86: Schutzvorsprung
- 87: gabelförmiger Abschnitt
- 88: flexibler Bereich

- 100: Rotor
- 102: Welle

- 110: Sensor
- 112: Sensormagnet

- 120: Kopplungsmagnet

- D: Drehachse
- F: Fahrtrichtung
- H: Hochachse
- L: Längsachse
- Q: Querachse

## Patentansprüche

1. Sattelkupplungssystem (60) mit einem Unterbau (50), mit einer Sattelkupplungsplatte (42), die eine in Fahrtrichtung F passierbare Einfahröffnung (44) für einen Königszapfen (36) eines Sattelaufliegers (30) und eine in Fahrtrichtung F an die Einfahröffnung (44) anschließende Bucht (46) für den Königszapfen (36) aufweist, und mit einer Winkelmesseinrichtung (70), die einen Rotor (100) und einen Sensor (110) aufweist, wobei der Rotor (100) derart gelagert ist, dass er relativ zu dem Sensor (120) um eine Drehachse D drehbar ist, und wobei der Sensor (110) eingerichtet ist, eine Rotation des Rotors (100) um die Drehachse D relativ zu dem Sensor (110) zu erfassen,
wobei der Rotor (100) oder der Sensor (110) einen Kopplungsmagneten (120) umfasst, mittels dem der Rotor (100) oder der Sensor (110) lösbar mit dem Königszapfen (36) verbindbar ist,
**dadurch gekennzeichnet, dass** die Winkelmesseinrichtung (70) mindestens einen Freiheitsgrad gegenüber dem Unterbau (50) und/oder der Sattelkupplungsplatte (42) aufweist.

2. Sattelkupplungssystem (60) nach Anspruch 1,
**dadurch gekennzeichnet, dass** der Freiheitsgrad eine Bewegung entlang einer Querachse Q und/oder eine Bewegung entlang einer Längsachse L und/oder eine Bewegung entlang einer Hochachse H und/oder eine Drehung um die Querachse Q und/oder eine Drehung um die Längsachse L ist.

3. Sattelkupplungssystem (60) nach Anspruch 2,
**dadurch gekennzeichnet, dass** der Freiheitsgrad die Bewegung entlang der Querachse Q auf einer Länge von > 0 mm bis 30 mm und/oder die Bewegung entlang der Längsachse L auf einer Länge von > 0 mm bis 40 mm und/oder die Bewegung entlang der Hochachse H auf einer Länge von > 0 mm bis 50 mm und/oder die Drehung um die Querachse Q um einen Winkel von > 0° bis 30° und/oder die Drehung um die Längsachse L um einen Winkel von > 0° bis 15° ermöglicht.

4. Sattelkupplungssystem (60) nach einem der vorhergehenden Ansprüche,
**dadurch gekennzeichnet, dass** der Rotor (100) und der Sensor (110) derart miteinander verbunden sind, dass eine Relativbewegung zwischen Rotor (100) und Sensor (110) entlang der Drehachse D verhindert wird oder dass eine Relativbewegung zwischen Rotor (100) und Sensor (110) entlang der Drehachse D bis zu einem definierten Abstand ermöglicht wird, wobei eine Rückhaltefeder vorgesehen ist, die einer zunehmenden Beabstandung von Rotor (100) und Sensor (110) entgegenwirkt.

5. Sattelkupplungssystem (60) nach einem der vorhergehenden Ansprüche,
**dadurch gekennzeichnet, dass** die Winkelmesseinrichtung (70) eine Halterung (80) umfasst, an welcher der Sensor (110) ortsfest angeordnet und in welcher der Rotor (100) drehbar gelagert ist, wobei die Halterung (80) verschiebbar und/oder drehbar mit dem Unterbau (50) und/oder der Sattelkupplungsplatte (42) verbunden ist.

6. Sattelkupplungssystem (60) nach einem der vorhergehenden Ansprüche,
**dadurch gekennzeichnet, dass** die Halterung (80) über einen Arm (72) mit dem Unterbau (50) und/oder der Sattelkupplungsplatte (42) verbunden ist, wobei die Halterung (80) relativ zu dem Arm (72) verschiebbar und/oder drehbar ist und/oder wobei der Arm (72) relativ zu dem Unterbau (50) und/oder der Sattelkupplungsplatte (42) verschiebbar und/oder drehbar ist.

7. Sattelkupplungssystem (60) nach einem der Ansprüche 5 oder 6,
**dadurch gekennzeichnet, dass** die Halterung (80) und/oder der Arm (72) mittels Federkraft entgegen ihrer Verschiebbarkeit und/oder Drehbarkeit vorgespannt sind.

8. Sattelkupplungssystem (60) nach einem der Ansprüche 6 oder 7,
**dadurch gekennzeichnet, dass** die Halterung (80) einteilig ist und mehrere Abschnitte umfasst, die über zumindest einen flexiblen Bereich (88) miteinander verbunden und relativ zueinander bewegbar und/oder drehbar sind.

9. Sattelkupplungssystem (60) nach einem der Ansprüche 5 bis 8,
**dadurch gekennzeichnet, dass** die Halterung (80) und/oder der Arm (72) aus einem nicht-magnetisierbaren Material besteht.

10. Sattelkupplungssystem (60) nach einem der vorhergehenden Ansprüche,
**dadurch gekennzeichnet, dass** die Winkelmesseinrichtung (70) eine Zentrierhilfe aufweist, mittels welcher die Winkelmesseinrichtung (70) und/oder der Rotor (100) und/oder der Kopplungsmagnet (120) beim Einfahren des Königszapfens (36) positioniert wird, wobei die Zentrierhilfe mindestens einen Zentrierstift (84) und/oder eine Zentrierkontur aufweist.

11. Sattelkupplungssystem (60) nach einem der vorhergehenden Ansprüche,
**dadurch gekennzeichnet, dass** die Winkelmesseinrichtung (70) mindestens einen Abstandshalter aufweist, der von der Halterung (80) aus entlang der Hochachse H über den Kopplungsmagneten (120) hinaus ragt und verhindert, dass der Kopplungsmagnet (120) in direkten Kontakt mit dem Königszapfen (36) kommt und/oder bewirkt, dass der Kopplungsmagnet (120) in einem vordefinierten Abstand zu dem Königszapfen (36) gehalten wird.

12. Sattelkupplungssystem (60) nach einem der vorhergehenden Ansprüche,
**dadurch gekennzeichnet, dass** die Winkelmesseinrichtung (70) mindestens einen Schutzvorsprung (86) zum Schutz der Winkelmesseinrichtung (70) oder eines Teils davon gegen mechanische Beschädigung durch einen einfahrenden Königszapfen (36) aufweist.

13. Zugfahrzeug (20) für einen Sattelauflieger (30) mit einem Chassis (22), einem Fahrwerk (26) und einem Sattelkupplungssystem (60) nach einem der vorhergehenden Ansprüche wobei die Winkelmesseinrichtung (70) eine Halterung (80) umfasst, an welcher der Sensor (110) angeordnet und in welcher der Rotor (100) drehbar gelagert ist, wobei die Halterung (80) verschiebbar und/oder drehbar mit dem Chassis (22) und/oder einer auf dem Chassis (22) angeordneten Montageplatte verbunden ist.

14. Sattelzug (10) mit einer Zugfahrzeug (20) gemäß Anspruch 13, wobei der Rotor (100) oder der Sensor (110) mittels des Kopplungsmagneten (120) lösbar mit dem Königszapfen (36) verbunden ist.
